# EUROPEAN PATENT APPLICATION

(11) **EP 3 943 747 A1**
(43) Date of publication of application: **26.01.2022**
(21) Application number: 20187661.2
(22) Date of filing: 24.07.2020
(51) Int. Cl.: F03D 13/25, B63B 21/50, F03D 17/00

(54) **MONITORING OF MOORING LINES OF A FLOATING WIND TURBINE**

(71) Applicant: Siemens Gamesa Renewable Energy A/S, 7330 Brande (DK)
(72) Inventor: Esbensen, Thomas, 7400 Herning (DK); Laugesen, Kasper, 6700 Esbjerg (DK)
(74) Representative: Aspacher, Karl-Georg

(57) **Abstract**

Monitoring a mooring line of a floating wind turbine (100) including a mooring system (200) comprises the steps of:
- measuring an operational variable of the wind turbine (100), the operational variable being influenced by the mooring system (200),
- comparing the measured operational variable with at least a desired value,
- detecting a status of the mooring system (200) based on the result of said comparing.

## Description

### Field of invention

The present invention relates to a monitoring system and method for a mooring line of a floating wind turbine. Such monitoring system and method detect and/or predict mooring line faults and/or mooring line failure events and mitigate the faults in the mooring line, when or before they occur.

### Art Background

A floating wind turbine comprises a buoyant platform supporting the wind turbine tower, nacelle and wind rotor. The buoyant platform may be anchored to the sea bottom by a plurality of cables, which defines the mooring system. The platform and the mooring system are subject to hydrodynamic forces, while the tower, nacelle and wind rotor are subject to aerodynamic forces. In general, the wind can be considered both as a power producing quantity and a loading quantity, while the waves most often are purely considered as a pure disturbing loading quantity. Hybrid solutions also exist which produce power from both wind and waves. In such context, the general purpose of mooring systems is station keeping and/or stabilization of the floating wind turbine.

Hence, there may be a need to provide a method and system for detecting mooring line faults and/or mooring line failure events and providing accommodation strategies preventing catastrophic events.

### Summary of the Invention

This need may be met by the subject matter according to the independent claims. Advantageous embodiments of the present invention are described by the dependent claims.

According to a first aspect of the invention there is provided a method for monitoring a mooring system of a floating wind turbine including a mooring system. The method comprises the steps of:
- measuring an operational variable of the wind turbine, the operational variable being influenced by the mooring system,
- comparing the measured operational variable with at least a desired value,
- detecting a status of the mooring system based on the result of said comparing.

According to a second aspect of the invention there is provided a monitoring system for a mooring system of a floating wind turbine. The monitoring system comprises:
- at least one sensor for measuring an operational variable of the wind turbine, the operational variable being influenced by the mooring system,
- a controller configured for comparing the measured operational variable with at least a desired value and detecting a status of the mooring system based on the result of said comparing.

The described monitoring system or method permits to diminish the conservatism in the design of a mooring line of the mooring system by mitigating the faults in the mooring line, when or before they occur. This will drive a more cost-effective floating design. Over-designing a mooring line or introducing additional redundant mooring lines can be avoided, thus reducing costs.

The method of the present invention may be performed continuously or periodically.

A floating wind turbine comprises a floating foundation which may move. By a movement of the floating foundation the floating wind turbine mounted on the floating foundation moves correspondingly by orienting itself along a direction, which is defined as "floater orientation". The motion of the floating foundation respectively the motion of the floating wind turbine may be divided into six individual degrees of freedom, namely three translations, i.e. a surge, a sway and a heave, and three rotation angles, i.e. a floater roll, a floater pitch and a floater yaw. The floater orientation may be defined by one or more angles, for example by one or more of floater roll, floater pitch and floater yaw.

Due to similarities in naming between the pitch of the blades and the pitch of the floating foundation, a clear distinction is made in this application by distinguishing between a floater pitch and a blade pitch. Floater pitch denotes a rotation of the floating foundation arounds its point of rotation and a blade pitch denotes a controlled pitching of the blades. Likewise, a floater yaw denotes a rotation of the floating foundation around its vertical axis (heave), and turbine yaw denotes a rotation of a nacelle. The floater roll denotes a rotation of the floating foundation around an axis perpendicular to both the vertical axis and the floater pitch axis.

Floating wind turbines may be classified according to how they achieve their static stability, i.e. according to the type of floating platform they include. Floating platform may be divided into three different categories: spar-buoy platforms, barges platforms, and tension leg platforms. The present invention may be applied to any floating wind turbine including any of such floating platforms. The present invention may be applied also to hybrid versions of the different concepts or any other floater concept utilizing a mooring system for station-keeping or stabilization.

The spar-buoy platform achieves stability by ballasting the bottom of the floater to lower the centre of gravity (COG), which is significantly below the centre of buoyancy (COB). Having the COG below the COB creates a restoring moment, whenever these points are not aligned vertically. This pulls the floating wind turbine back to its equilibrium whenever disturbed by external forces such as wind, waves, and current.

The barge platform achieves stability by having a large water plane area (horizontal plane), creating a resistance against floater roll and pitch rotation. The large water plane area yields high hydrostatic restoring moments stabilizing the system.

The tension leg platform (TLP) achieves stability by having a high taut, i.e. pulled tight under high tension, vertical mooring system. The high tension in the mooring lines are achieved by an excess of buoyancy pulling the floating wind turbine upward. This force interaction gives rise to very high heave, roll, and pitch stiffnesses, while the stiffness in surge, sway and yaw directions are lower. The system is allowed to move in the horizontal plane, while maintained around a given rotation centre.

A floating wind turbine may include a mooring system attached to the floating platform. The mooring system may comprise a single line or cable or a plurality of lines or cables connecting the floating wind turbine to the anchors installed on the seabed. The overall objective of the mooring system is to maintain the floating wind turbine position by restraining the floating wind turbine displacements, which may occur due to the aerodynamic and hydrodynamic loads. This is usually referred to as "station keeping". Furthermore, the mooring system may contribute directly to the overall stability of the floating wind turbine as in the case of a tension leg platform. Mooring lines can be constructed using either cables, chains, synthetic or fibre ropes or a mix thereof.

Furthermore, in some mooring systems buoys (providing buoyancy) can be attached to the mooring lines reducing the mooring system weight carried by the floating wind turbine. Furthermore, clump weights can be attached along the mooring lines to increase the mooring stiffness and reduce anchor tension fluctuations.

A mooring system may be classified in three different categories: catenary, tension leg and taut leg.

The catenary line is slack and hang under its own weight creating a catenary profile. A part of the line may be lying on the seabed. A catenary line provides the restoring forces by the suspended weight of the mooring line. A change of the mooring line configuration occurs due to the motion of the floating wind turbine, for instance a portion of the mooring line lying on the seabed might be lifted. Catenary mooring line may be used in combination with spar-buoy and barge platforms.

Tension legs are typically used for tension leg platforms.

A taut leg consists of a pretensioned line which is taut with an angle at the seabed below 90 degrees, usually between 30 and 45 degrees. In a taut leg mooring system, the anchor point is loaded by both horizontal and vertical forces. Catenary mooring line may be used in combination with spar-buoy and barge platforms.

Faults in the mooring lines may cause consequences, which are dependent on the type of mooring line. If a tension leg or taut mooring system loses one of the mooring lines, the floating wind turbine system may tip due to the loss of the stabilizing mechanism. Therefore, this kind of systems most often have a redundancy in the number of mooring lines in case one of the mooring lines fails. However, with the loss of one of the mooring lines the rest of the mooring system is exposed to additional loads, so if the mooring loss is not detected, additional failure might happen. If the catenary system loses one of the mooring lines, the floating wind turbine drifts to a new equilibrium point, however, the system will have less stiffness in the floater yaw direction. This may create higher floater yaw motion oscillations decreasing the annual energy production (AEP) and increasing the loads on the turbine and/or may expose the rest of the mooring system to additional load level which may lead to additional mooring line failures. If the overall mooring system fails, the floating wind turbine drifts away. If this happens within a floating wind farm collision with other floating wind turbines may occur and power cables may be pulled apart shutting down the entire farm. The present invention avoids or reduces the above inconveniences.

According to exemplary embodiments of the present invention, the operational variable may be a strain in the mooring line or at connection points. Connection points may be provided between the mooring line and the floating wind turbine or between the mooring line and an anchor point, for example an anchor point at the seabed. If the strain drops below a predefined threshold value this may indicates a mooring line failure or deterioration. Furthermore, significant changes in strain over time may be a fault indicator. Strain gauges or similar devices can be used to measure strains.

According to exemplary embodiments of the present invention, the operational variable may be an electric or electromagnetic signal value transmitted through the mooring line between the floating wind turbine and an anchor point at the seabed. Changes in transmission properties may be a fault indicator. In this principle a mooring line itself, or a wire inside the mooring line, may be used as the transmission medium.

According to exemplary embodiments of the present invention, the operational variable may be an acceleration of the floating wind turbine. If acceleration levels exceed a predefined threshold this may indicate a fault. Acceleration measurements may furthermore be combined with information regarding direction and intensity of wind and waves, to understand which acceleration the turbine is likely to experience under specific conditions. For instance, if very high acceleration values are experienced in calm wind and sea states, this may be a fault indicator. Accelerations may be measured by accelerometers that are standard sensors in a floating wind turbine. The acceleration may be measured on any of the nacelle, the tower or the floating foundation of the floating wind turbine.

According to exemplary embodiments of the present invention, the operational variable may be a floater orientation of the floating wind turbine. The floater orientation may comprise a floater roll angle and/or a floater pitch angle and/or a floater yaw angle of the floating wind turbine. The difference between the floater orientation and the direction of the incoming wind may be calculated. The difference may include a fixed offset and an oscillatory motion. The incoming wind direction may be measured by one or more wind direction sensor on the turbine, e.g. ultrasonic wind sensors, wind wanes, or lidars. The floating wind turbine may continuously try to face the wind, by activating the yaw system of the turbine. This continuously actuation of the yaw actuator may be therefore linked to a mooring line failure.

According to exemplary embodiments of the present invention, the operational variable may be another operational variable, which is influenced by the presence of the mooring line. The desired value to be compared with the operational variable may be a minimum or a maximum value of a desired range for the operational value.

According to exemplary embodiments of the present invention, the detected status of the mooring line may be a normal condition of the mooring line.

According to other exemplary embodiments of the present invention, the detected status of the mooring line may be a faulty condition of the mooring line. Detection of a fault in the mooring system, or identification of progression into a fault state, may be used to schedule a service of the floating wind turbine or of the floating platform or of the mooring system. This may mitigate the faults in the mooring line when or before they occur. Once a faulty state of the mooring system has been detected, the method may include the step of shutting down the floating wind turbine or curtailing speed and/or power of the floating wind turbine. A lower power value may reduce the aerodynamic loading. Curtailing the floating wind turbine to a lower speed setpoint may reduce the aerodynamic loading and reduce centrifugal forces on the system.

Once a faulty state of the mooring system has been detected, the method may alternatively or additionally include applying an active dampening of the floating wind turbine and/or of the mooring line.

According to exemplary embodiments of the present invention, the active dampening of the floating wind turbine comprises actively controlling a position and/or an orientation of the floating wind turbine.

The position and/or an orientation of the floating wind turbine may be detected through one or more sensors to be provided on the floating wind turbine or which are already present on the floating wind turbine. According to exemplary embodiments of the present invention, the sensor(s) may be at least one of the group consisting of a spinner pressure sensor, a wind speed sensor, a wind direction sensor, a blade load sensor. The sensor(s) may be accelerometer(s) or inclination sensor(s) or wave radar(s). Any of such sensors may detect a floater yaw angle or a floater pitch angle or a floater yaw angle.

Once a difference is detected between the position and/or the orientation of the floating wind turbine and a desired position and/or the orientation, an active control of the position and/or the orientation of the floating wind turbine may activated. The difference may include a fixed offset and an oscillatory motion.

According to exemplary embodiments of the present invention, the position and/or orientation of the floating wind turbine is controlled by operating an electric generator of the floating wind turbine. The generator could be controlled in such a way that it provides an up-righting moment in floater roll, achieved by an angular acceleration of the generator. If the floating turbine is tilting sideways in one direction the generator would rotate with an angular acceleration in the opposite direction such that a counter moment is generated. In case of a combined mooring line failure and grid loss the generator should be utilized as a motor, getting external power from either a battery or other power producing units, so that the rotor can do controlled rotations.

According to exemplary embodiments of the present invention, the position and/or orientation of the floating wind turbine is controlled by operating a blade pitch system. The blade pitch system could be utilized introducing small perturbations in the blade pitch angles increasing/decreasing the drag on the blades, along with making small perturbations to the mass balance.

According to exemplary embodiments of the present invention, the position and/or orientation of the floating wind turbine is controlled by operating an active blade add-on and/or an adjustable spoiler on the nacelle of the floating wind turbine. The adjustable spoiler may denote an aerofoil which may be adjusted dependent on the incoming wind field detected on the blade by the sensor. Adjusting the aerofoil may provide the possibility that a contact surface of the nacelle and/or the blade and/or the tower may be enlarged such that a higher aerodynamic load acts on the nacelle and/or the blade and/or the tower. Therefore, an offset and/or the oscillating motion of the floater pitch angle and/or the floater yaw angle and/or floater roll angle may be adapted.

According to exemplary embodiments of the present invention, the yaw orientation of the floating wind turbine can be controlled by individual pitch control which can introduce a yaw moment offset to the floater platform by blade pitching the blades individually at specific azimuth orientations of the blades.

According to exemplary embodiments of the present invention, the position and/or orientation of the floating wind turbine is controlled by operating a hydrodynamic device provided on a floating platform of the floating wind turbine. According to an exemplary embodiment of the present invention, the actuation device comprises an adjustable damper configured for damping a vibration of the floating wind turbine. The vibration of the floating wind turbine may cause translational and/or rotational movements of the floating wind turbine which may cause a difference from the predefined desired floater orientation. The adjustable damper may be configured such that the translational and/or rotational movements may be reduced and in the best case inhibited at all. Additionally, the adjustable damper may influence, by influencing a damping of the vibration of the floating wind turbine, the oscillating motion of the floater pitch angle and/or the floater yaw angle and/or the floater roll angle.
According to an exemplary embodiment of the invention, the actuation device comprises a liquid damper, a mass damper and/or a vortex induced vibration brake. The liquid damper may comprise a container in which a liquid may be filled in or emptied out dependent on the needed damping. The damping may be directly dependent on the mass of liquid present in the liquid damper. Preferably the liquid damper may work with sea water which is present around the floating wind turbine. The container may be fixed to the floating foundation. Further, the liquid damper may provide the possibility to have an actuation device which is easy and cheap to operate. The mass damper may by adjustable such that dependent on the needed amount of damping the weight of the mass damper is changed. Furthermore, the mass damper may provide the possibility to have an easy actuation device. The vortex induced vibration brake may provide the possibility to inhibit the floating wind turbine to lock into a vortex induced vibration locking frequency.

Thrusters may also be used to provide the necessary restoring moment in case of mooring line failures. For instance, a thruster can create counteracting moments by applying thrust in the opposite direction of the movements.

According to exemplary embodiments of the present invention, the position and/or orientation of the floating wind turbine is controlled by operating on or more actuators provided along the mooring line. A mooring line actuator can be used to actively change the mooring system into
a more favourable configuration limiting the stress on the remaining mooring lines. This can be done for example by shortening the length of the remaining mooring lines tightening up the overall system.

According to exemplary embodiments of the present invention, the position and/or orientation of the floating wind turbine is controlled by operating an underwater remote vehicle. A rover can be used in a similar way as the thrusters to provide the necessary restoring moment in case of mooring line faults. In case of a complete catenary mooring line failure, where the floating wind turbine is drifting away, a rover can be used to guide the floating wind turbine away from other floating wind turbines of the wind park.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a first floating wind turbine attached to a first mooring system.
Figure 2 shows a second floating wind turbine attached to a second mooring system.
Figure 3 shows a third floating wind turbine attached to a third mooring system.
Figure 4 shows a view of a floating wind turbine including a mooring system and a monitoring system according to the present invention.

### Detailed Description

The illustration in the drawings is schematic. It is noted that in different figures, similar or identical elements or features are provided with the same reference signs. In order to avoid unnecessary repetitions elements or features which have already been elucidated with respect to a previously described embodiment are not elucidated again at a later position of the description.

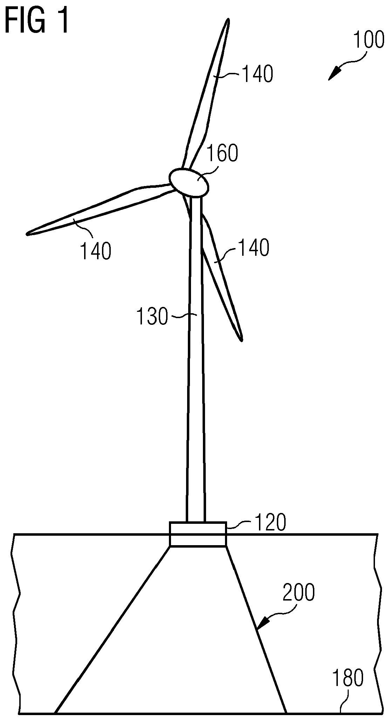

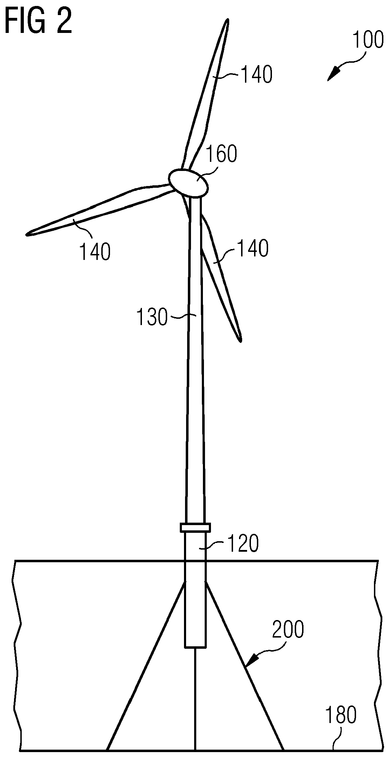

Figures 1 to 3 show respective simplified views of a floating wind turbine 100 according to respective exemplary embodiments of the present invention. The floating wind turbine 100 comprises three blades 140 mounted on a nacelle 160, a tower 130, a floating foundation 120 and a mooring system 200 for connecting the floating foundation 120 to a seabed 180. In the embodiment of figure 1, the floating foundation 120 is of the barge type and the mooring system 200 is of the taut type. In the embodiment of figure 2, the floating foundation 120 is of the spar-buoy type and the mooring system 200 is of the catenary type. In the embodiment of figure 2, the floating foundation 120 is of the tension leg type with a tension leg mooring system 200. According to other embodiments of the invention (not shown), other combinations of floating foundation 120 and mooring system 200 may be possible according to the present invention.

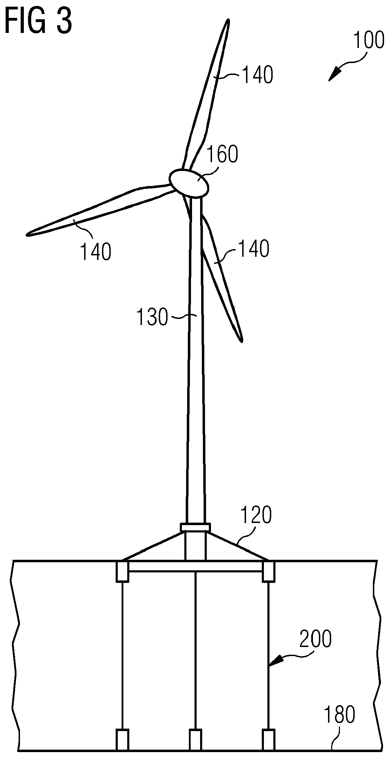

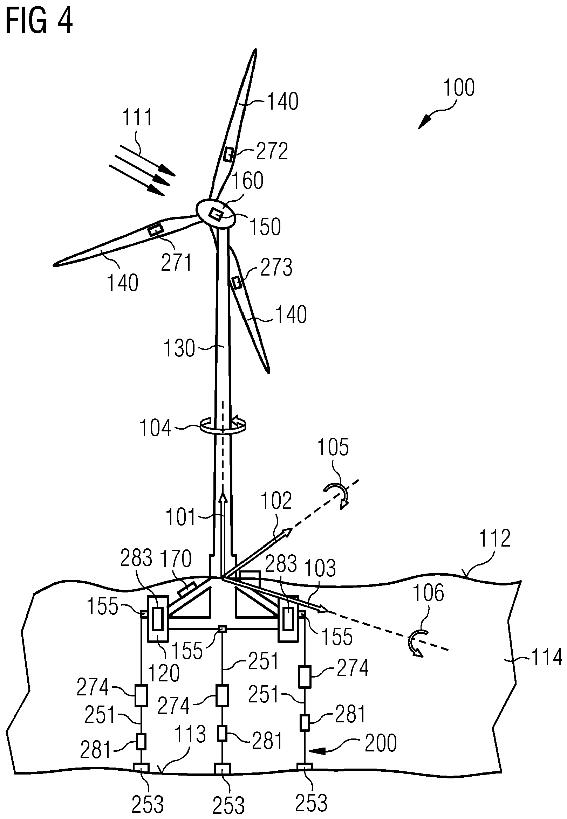

Figure 4 shows in more detail the floating wind turbine 100 of figure 3.

The floating wind turbine 100 floats in the sea water 114 and is held in position by the mooring system 200, which includes three tension leg mooring lines 251. The floating foundation 120 is fixed the mooring lines 251 in such a manner that the floating foundation 120 is dunked into sea water 114 under a sea surface 112. An incoming wind field 111 acts on the three blades 140 of the floating wind turbine 100 such that electrical energy may be generated by the floating wind turbine 100. The floating wind turbine 100 includes an electrical generator 150 inside the nacelle 160 for transforming the rotational energy of the three blades 140 into electrical energy. Each mooring line 251 is fixed to the floating foundation 120 by a mooring line fixation 155 and to a seabed 113 by an anchor 253. A mooring line actuator 281 is provided along each mooring line 251 for changing the length of the mooring line 251. A strain gauge 274 is provided along each mooring line 251 for detecting a strain of the mooring line 251.

The floating wind turbine 100 has six individual degrees of freedom in which the floating wind turbine 100 may move. Namely, three translations, i.e. a surge 103, a sway 102 and a heave 101, and three rotation angles, i.e. a floater roll 106, a floater pitch 105 and a floater yaw 104. The alignment of the floating wind turbine 100 as shown in Figure 4 may illustrate a predefined desired floater orientation of the floating wind turbine 100. The predefined desired floater orientation may be defined by one or more angle values, for example one value of the floater roll 106 and/or a value of the floater pitch 105 and/or a value of the floater yaw 104. Consequently, the predefined desired floater orientation of the floating wind turbine 100 may be defined by a set of predefined desired floater roll 106, floater pitch 105 and floater yaw 104.

The floating wind turbine 100 comprises a blade load sensor 271, a wind speed sensor 272 and a wind direction sensor 273 each mounted on one of the blades 140 or the nacelle 160.

Alternatively or additionally, other sensors may be present on the floating wind turbine 100, for example an accelerometer and/or an inclination sensor and/or a wave radar mounted on any of the nacelle 160 and/or the blade 140 and/or the tower 130 and/or the floating foundation 120. The sensors 271, 272, 273 measure respective operational variables, which can be associated with the floater orientation of the floating wind turbine 100. For example, the measured values may be associate with a floater roll 106 and/or a floater pitch 105 and/or a floater yaw 104. Such measured values are influenced by the mooring lines 251. A failure in one mooring line 251 may cause a change a floater roll 106 and/or a floater pitch 105 and/or a floater yaw 104 and therefore of the floater orientation of the floating wind turbine 100.

The floating wind turbine 100 comprises two liquid dampers 283 inside the floating foundation 120.

The floating wind turbine 100 comprises a monitoring system including the sensors 271, 272, 273, 274 and a controller 170 configured for comparing the measured operational variable with at least a desired value and detecting a status of the mooring line 200 based on the result of said comparing. The controller 170 is mounted on the floating foundation 120. According to other embodiments of the present invention (not shown), the controller 170 may be mounted on another component of the floating wind turbine 100. The detected status of the mooring line 200 may be a normal or a faulty condition. When a faulty status of the mooring line 200 is detected, the controller 170 may perform at least one of the following steps:
- shutting down the floating wind turbine 100,
- curtailing speed and/or power of the floating wind turbine 100,
- applying an active dampening of the floating wind turbine 100 and/or of the mooring system 200.

To perform such active dampening, the controller 170 may activate one or more actuator, for example the mooring line actuator 281 or the liquid dampers 283.

An active dampening of the floating wind turbine 100 may be performed by activating the liquid dampers 283.

Alternatively or additionally, as actuation device the electric generator 150 of the floating wind turbine 100 may be used. Alternatively or additionally, the blade pitch system (not represented in the figures) may be used as actuation device. Other actuation devices may include an adjustable spoiler on a nacelle and/or an active blade add-on.

An active dampening of the mooring system 100 may be performed by activating the mooring line actuator 281.

It should be noted that the term "comprising" does not exclude other elements or steps and the use of articles "a" or "an" does not exclude a plurality. Also, elements described in association with different embodiments may be combined. It should also be noted that reference signs in the claims should not be construed as limiting the scope of the claims.

## Claims

1. Method for monitoring a mooring line of a floating wind turbine (100) including a mooring system (200), the method comprising the steps of:
- measuring an operational variable of the wind turbine (100), the operational variable being influenced by the mooring system (200),
- comparing the measured operational variable with at least a desired value,
- detecting a status of the mooring system (200) based on the result of said comparing.

2. Method according to the claim 1, wherein the operational variable is any of:
- a strain in the mooring system (200) or at connection points between the mooring line and the floating wind turbine (100) or an anchor point (300),
- an electric or electromagnetic signal value transmitted through the mooring line between the floating wind turbine (100) and an anchor point (300),
- an acceleration of the floating wind turbine (100),
- a floater orientation of the floating wind turbine (100).

3. Method according to claim 2, wherein the floater orientation comprises a floater roll angle (106) and/or a floater pitch angle (105) and/or a floater yaw angle (104).

4. Method according to any of the previous claims, wherein the at least a desired value is a minimum or a maximum value of a desired range for said operational variable.

5. Method according to any of the preceding claims, wherein said status is a faulty condition of the mooring system (200) .

6. Method according to any of the preceding claims, wherein when a faulty status of the mooring system (200) is detected then the method includes at least one of the following steps:
- shutting down the floating wind turbine (100),
- curtailing speed and/or power of the floating wind turbine (100),
- applying an active dampening of the floating wind turbine (100) and/or of the mooring system (200).

7. Method according to claim 6, wherein the active dampening of the floating wind turbine (100) comprises actively controlling a position and/or an orientation of the floating wind turbine (100).

8. Method according to claim 7, wherein the position and/or orientation of the floating wind turbine (100) is controlled by operating an electric generator of the floating wind turbine (100) and/or a blade pitch system and/or an active blade add-on and/or an adjustable spoiler on the nacelle of the floating wind turbine (100).

9. Method according to claim 7, wherein the position and/or orientation of the floating wind turbine (100) is controlled by operating a hydrodynamic device provided on a floating platform of the floating wind turbine (100).

10. Method according to claim 7, wherein the position and/or orientation of the floating wind turbine (100) is controlled by operating on or more actuators provided along the mooring system (200) .

11. Method according to claim 7, wherein the position and/or orientation of the floating wind turbine (100) is controlled by operating an underwater remote vehicle.

12. Monitoring system for a floating wind turbine (100) including a mooring system (200), the monitoring system comprising:
- at least one sensor (271, 272, 273) for measuring an operational variable of the wind turbine (100), the operational variable being influenced by the mooring line (200),
- a controller (170) configured for comparing the measured operational variable with at least a desired value and detecting a status of the mooring system (200) based on the result of said comparing.

13. Monitoring system according to claim 12, wherein the controller (170) is further configured to, when a faulty status of the mooring line (200) is detected, to perform at least one of the following steps:
- shutting down the floating wind turbine (100),
- curtailing speed and/or power of the floating wind turbine (100),
- applying an active dampening of the floating wind turbine (100) and/or of the mooring system (200).

14. Monitoring system according to claim 12 or 13, wherein applying an active dampening comprises activating a dampening actuator (281, 283) of the floating wind turbine (100) and/or of the mooring system (200).

15. Floating wind turbine (100) including:
a wind rotor comprising a blade (140),
a tower (130) to which the wind rotor is mounted,
a floating foundation (120) to which the tower (130) is mounted,
at least a mooring system (200) for connecting the floating wind turbine (100) to at least an anchor, and
a monitoring system according to any of the claim 12 to 14.
